# EUROPÄISCHE PATENTSCHRIFT

(11) **EP 3 669 451 B1**
(45) Veröffentlichungstag und Bekanntmachung des Hinweises auf die Patenterteilung: **09.08.2023**
(21) Anmeldenummer: 18793428.6
(22) Anmeldetag: 26.10.2018
(51) Int. Cl.: H02P 5/00, H02P 6/04, H02P 21/12

(54) **VERFAHREN FÜR EINEN MEHRMOTORBETRIEB**
METHOD FOR A MULTI-MOTOR OPERATION
PROCEDE POUR UN ENTRAÎNEMENT MULTIMOTEUR

(30) Priorität: 27.10.2017 DE 102017125317
(43) Veröffentlichungstag der Anmeldung: 24.06.2020
(73) Patentinhaber: EBM-Papst Mulfingen GmbH&CO. KG, 74673 Mulfingen (DE)
(72) Erfinder: KILIAN, Thomas, 74238 Krautheim (DE); SCHROTH, Sebastian, 74635 Kupferzell (DE); WECKERT, Marco, 97980 Bad Mergentheim (DE); WIEDMANN, Georg, 74532 Ilshofen (DE); WYSTUP, Ralph, 74653 Künzelsau (DE)
(74) Vertreter: Staeger & Sperling Partnerschaftsgesellschaft mbB
(86) Internationale Anmeldenummer: PCT/EP2018/079508
(87) Internationale Veröffentlichungsnummer: WO 2019/081768

(56) Entgegenhaltungen:
- EP-A1- 2 905 891
- EP-A1- 3 091 653
- US-A1- 2017 257 048

## Beschreibung

Die Erfindung betrifft ein Verfahren zum Betrieb mehrerer elektronisch kommutierter Motoren (EC-Motoren) an einem einzigen Umrichter.

Im Stand der Technik werden für den Betrieb eines elektronisch kommutierten Motors typischerweise je ein Umrichter, wie z. B. ein Wechselrichter oder Frequenzumrichter für den Betrieb des Motors verwendet. Werden für eine Anwendung mehrere Motoren benötigt, ließen sich durch die Verwendung lediglich eines gemeinsamen Umrichters Kosten sparen. Im Stand der Technik gibt es bereits Ansätze, wie mehrere Motoren als Master-Slave System angesteuert werden können. In der Publikation von Yongjae Lee and J.I.Ha, "Minimization of stator currents for mono inverter dual parallel PMSM drive system", 2014 International Power Electronic Conference (IPEC -Hiroshima 2014 - ECCE ASIA) pp. 3140 - 3144 wird ein Steuerungsverfahren und die Art und Weise der Regelung von zwei parallelgeschalteten Maschinen beschrieben. Hierbei wird ein Stromregler zur Erzeugung eines d-Stromanteils im entsprechenden d/q-System eingesetzt.

In der Publikation von D.Bidart, M. Pietrzak-David, P. Maussion and M. Fadel, "Mono inverter multi-parallel permanent magnet synchronous motor: structure and control strategy", in IET Electric Power Applications, vol. 5, no. 3, pp. 288-294, March 2011 wird eine Regelungslösung zum Betrieb mehrerer PMSM beschrieben, wobei ein Referenzmotor zur Regelung verwendet wird und die Art und Weise, wie der für die Regelung notwendige Referenz-Motor dynamisch zur Laufzeit bestimmt wird. Als Referenz-Motor wird derjenige Motor der mehreren PMSM gewählt, der mit dem höchsten Drehmoment belastet wird.

Weiterer druckschriftlicher Stand der Technik, im vorliegenden technischen Gebiet, welcher den Oberbegriff des Anspruchs 1 widerspiegelt, ist in den Dokumenten EP 2 905 891 A1 und EP 3 091 653 A1 offenbart.

Es besteht ein Bedarf danach, die Regelung von zwei oder mehreren EC-Motoren weiter zu optimieren, um die Kosten für die benötigte Elektronik zu reduzieren und die Betriebsweise der Motoren zu optimieren.

Es ist daher Aufgabe der vorliegenden Erfindung, ein Verfahren bereit zu stellen, um zwei oder mehrere Motoren an einem Umrichter betreiben zu können, womit ein zuverlässiges und stabiles Regelverhalten der beteiligten Motoren erzielt werden soll.

Diese Aufgabe wird gelöst mit einem Verfahren nach Anspruch 1.

Ein Aspekt der Erfindung besteht darin, das Regelungsverfahren so auszugestalten, dass mit Hilfe einer Winkel- und Drehzahldifferenzauswertung die Spannungsstellung am Ausgang des Umrichters derart geregelt wird, dassdie zwei oder mehreren EC-Motoren im Betrieb einen stabilen Arbeitspunkt einnehmen bzw. einer bestimmungsgemäßen Abfolge von Arbeitspunkten folgen.

Dies kann durch die Verwendung einer der drei folgenden Regelungsoptionen erreicht werden. Regelungsoption 1: Veränderung der Amplitude der Ausgangsspannung des Umrichters, Regelungsoption 2: Veränderung der Phasenlage der Ausgangsspannung des Umrichters und Regelungsoption 3: Veränderung von Amplitude und Phasenlage der Ausgangsspannung des Umrichters, kombiniert mit vorzugsweise je einer der folgenden Unteroptionen.

Als Regelungsoption 1, 2 und 3 werden im Sinne dieser Erfindung primäre Regelungsoptionen verstanden, während die Unteroptionen im Sinne von sekundären Optionen verstanden werden. Somit wird zunächst eine der drei primären Regelungsoptionen ausgewählt und daran angeschlossen sekundäre Optionen, im Folgenden "Unteroptionen" genannt.

Als Unteroption werden erfindungsgemäß vorgeschlagen, ein Motorreferenzsystem zur Regelung zu verwenden, den Betriebspunkt über einen Drehzahlregler, den Aussteuerungsgrad oder eine reine Stromregelung vorzunehmen und/oder die Sicherstellung eines bzw. des bevorzugten Betriebspunktes über eine Stromphasenregelung, eine mathematische Regelungsfunktion oder über Wertezuordnungstabellen vorzunehmen. Somit ergeben sich folgenden Unteroptionen: Unteroption 1: Wahl des Refenzmotors/ Referenzsystems, Unteroption 2: Wahl des Betriebspunktes und Unteroption 3: Sicherstellung eines bzw. des bevorzugten Betriebspunktes.

Betreffend der erfindungsgemäßen Unteroption 1 wird als Motorreferenzsystem wahlweise der Motor mit der höchsten Drehzahl, der Motor mit der niedrigsten Drehzahl, ein beliebiger sich im System befindender Motor der mehreren EC-Motoren oder alternativ ein fiktiver Referenzmotor verwendet. Die Auswahl des Referenzmotors im Steuerungs- bzw. Regelungssystem wirkt sich im Wesentlichen auf die statische und dynamische Stabilität des Systems, sowie auf die Effizienz, mit welcher die Motoren bzw. das gesamte System betrieben werden können, aus.

In einer vorteilhaften Ausgestaltung der Erfindung kann vorgesehen werden, dass der in Bezug auf die Phasenlage am weitesten vorrauseilende Motor, der damit gleichzeitig auch der am schwächsten belastete Motor darstellt, als Referenzmotor für die Steuerung des Motorensystems dient. Dieser Motor ist zugleich derjenige Motor, der die größte Feldverstärkung im magnetischen Feld erfährt. Alle anderen Motoren erfahren währenddessen eine geringere Feldverstärkung oder eine Feldschwächung und bilden dadurch ein höheres Drehmoment als der vorauseilende Motor aus.

In einer alternativen Ausgestaltung der Erfindung dient der am weitesten nacheilende Motor, der gleichzeitig auch der am stärksten belastete Motor darstellt, als Referenzmotor. Dieser Motor ist zugleich derjenige Motor, der die größte Feldschwächung im Feld erfährt. Sofern allerdings die Betriebsweise Feldverstärkung zur Anwendung kommt, erfährt dieser Motor die geringste Feldverstärkung. Alle weiteren vom gleichen Umrichter im System geregelten Motoren erfahren eine geringere Feldschwächung oder eine Feldverstärkung und bilden dadurch ein geringeres Moment aus, als der nacheilende Referenzmotor.

In einer weiteren alternativen Ausgestaltung dient ein beliebig ausgewählter Motor im System als Referenzmotor. In einer solchen Regelungstopologie kann einer der vom Umrichter angesteuerten EC-Motoren in seinem optimalen Betriebspunkt eingestellt werden, während die anderen Motoren entsprechend in Bezug auf die Phasenlage vor- oder nachlaufen.

Alternativ kann im Regelungsverfahren zur Steuerung der am Umrichter betriebenen EC-Motoren auch vorgesehen sein, dass der jeweilige Referenzmotor dynamisch gewechselt wird, so dass abhängig vom Betriebsverhalten jeweils ein anderer Motor als Referenzmotor dient.

In einer anderen Regelungsoption des Regelungsverfahrens wird als Referenzmotor ein fiktiver Motor verwendet, dessen Winkellage z. B. über eine geeignete Gewichtung der Winkellagen aller am Umrichter betriebenen Motoren bestimmt wird. Somit erhält der fiktive Motor eine theoretische Phasenverschiebung, die sich aus der Summe der Winkellagen mehrerer oder aller am gleichen Umrichter in Betrieb befindlichen EC-Motoren ergibt.

Durch eine solche Gewichtung der Winkellagen der beteiligten Motoren lassen sich vielfältige Einstell- und Regelmöglichkeiten realisieren. Hierdurch lässt sich bspw. der effizienteste Betriebspunkt des gesamten Antriebssystems, die Regelreserve eines bestimmten Motors oder des gesamten Systems entsprechend der Gewichtung einstellen.

Das für die Regelung relevante Referenzkoordinatensystem ergibt sich aus der Wahl des Referenzmotors. Bei Verwendung eines feldorientierten bzw. rotorfesten Koordinatensystems ist ein solches Koordinatensystem beim Anschluss mehrerer EC-Motoren an einem gemeinsamen Umrichter jedoch nicht eindeutig bestimmt, da jeder EC-Motor ein eigenes rotorfestes Koordinatensystem besitzt. Wenn noch eine unterschiedliche Belastung der EC-Motoren und/oder wenn abweichende Motorparameter hinzukommen, weichen die Koordinatensysteme sowohl statisch als auch dynamisch alle voneinander ab. Je nach Ansteuerung des Betriebspunktes gemäß einer Drehzahlregelung, Aussteuergradstellung oder reiner Stromregelung ergibt sich dann durch die entsprechende Wahl des Referenzmotors auch das entsprechende Referenzkoordinatensystem mit seinem Transformationswinkel γ_{ref}.

Die Beschreibung der elektrischen Größen in dem Steuerungssystem erfolgt dabei ausschließlich in diesem vom gewählten Referenzmotor abhängigen Referenzkoordinatensystem.

Der vom Umrichter bereit zu stellende Ausgangsspannungszeiger Uxy setzt sich aus den Größen Ux und Uy zusammen, welche senkrecht aufeinander stehen. Im Sonderfall, dass keine Feldschwächung gegeben ist, so dass der Spannungszeiger u und der Stromzeiger i des Umrichters genau um den Belastungswinkel ϕ gegeneinander verschoben sind, ergibt sich durch (Clark/Park) Transformation des Spannungszeigers Uxy mit dem Winkel γ_{ref} + ϕ und anschließender Rücktransformation mit dem Winkel γ_{ref} der feldorientierte Spannungszeiger Udq im Referenzkoordinatensystem.

In Bezug auf den zuvor genannten Aspekt der Wahl des Betriebspunktes ergeben sich folgende Ausgestaltungsmöglichkeiten als Unteroption 2. Dabei kann mittels eines Drehzahlreglers durch regelmäßigen oder kontinuierlichen Vergleich von Ist- und Solldrehzahl dafür gesorgt werden, dass die EC-Motoren über die Ausgangsspannung am Umrichter in ihrem gewünschten Betriebspunkt gehalten werden.

Alternativ kann der gewünschte Betriebspunkt auch über die Vorgabe eines fixen Aussteuergrades bzw. Tastgrads vom Umrichter erreicht werden. Der Betriebspunkt stellt sich dann automatisch ein.

Ebenfalls von Vorteil ist ein Regelbetrieb, bei dem die Wahl eines Betriebspunktes mittels eines Stromreglers realisiert wird. Dieser Stromregler prägt auf den Motorwicklungen den gewünschten Sollstrom ein. Dies kann z. B. erforderlich sein, wenn der Motor als Lastmaschine betrieben werden soll.

In Bezug auf den zuvor genannten Aspekt der Sicherstellung desbevorzugten Betriebspunktes ergeben sich folgende Ausgestaltungsmöglichkeiten als Unteroption 3. Als Vorauswahl für das Regelungsverfahren ist zunächst die passende Wahl des Referenzsystems d. h. des Referenzmotors, dessen Betriebswerte (wie z. B. Drehzahl oder Phasenlage) als Referenz beim Regelbetrieb genutzt werden, entscheidend, um den bevorzugten Betrieb zu erreichen. Bei Verwendung eines Stromphasenreglers sorgt dieser dafür, dass der resultierende Strom genau den erforderlichen d-Strom-Anteil im dq-System enthält. Durch diese Maßnahme wird der bevorzugte Betriebspunkt im Regelbetrieb erreicht. Hierzu stellt der Stromphasenregler an seinem Ausgang den Phasenwinkel Δy ein. Dieser Winkel Δy entspricht im eingeschwungenen Zustand des Referenzmotors genau der sich durch die Belastung des Referenzmotors ergebenden Phasen̅verschiebung ϕ. Dieser Winkel kann alternativ auch über eine geeignete mathematische Funktion (z. B. in Abhängigkeit der Belastung und der Drehzahl des Motors) bestimmt werden, um einen bevorzugten Betriebspunkt zu erreichen.

Alternativ kann die Regelung des optimalen Betriebspunktes auch dadurch erfolgen, dass eine Wertetabelle mit entsprechenden Korrelationswerten zwischen benötigtem Winkel und Betriebspunkt zum Einsatz kommt, die sicherstellt, dass der für den bevorzugten Betriebspunkt benötigte Winkel auch passend eingestellt wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Regelschaltbild zur Erläuterung einer ersten Ausführungsform der Erfindung,
- Fig. 2: den Drehzahlverlauf von drei EC-Motoren an einem Umrichter nach dem ersten Ausführungsbeispiel,
- Fig. 3: den Drehmomentverlauf von drei EC-Motoren an einem Umrichter nach dem ersten Ausführungsbeispiel, wobei zum Zeitpunkt t = 1s ein beispielhafter Lastsprung bei zwei der drei Motoren stattfindet,
- Fig. 4: den feldorientierte Stromverlauf von drei EC-Motoren an einem Umrichter nach dem ersten Ausführungsbeispiel und dem beispielhaften Lastverlauf nach Figur 3,
- Fig. 5: den Drehzahlverlauf der drei EC-Motoren an dem Umrichter nach dem ersten Ausführungsbeispiel und dem besipielhaften Lastverlauf nach Figur 3, und
- Fig. 6: ein Regelschaltbild zur Erläuterung einer alternativen Ausführungsform der Erfindung.

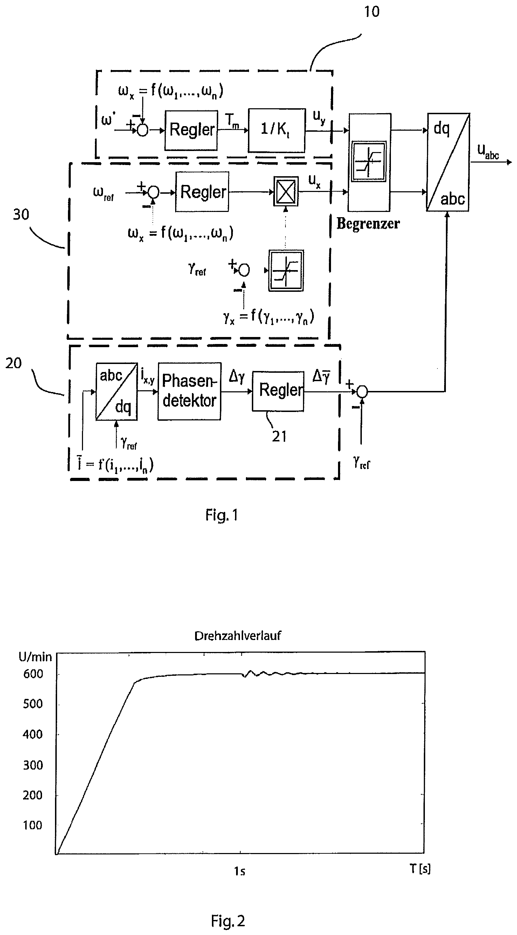

Im Folgenden wird die Erfindung anhand der Figuren 1 bis 6 näher erläutert, wobei gleiche Bezugszeichen auf gleiche strukturelle und/oder funktionale Merkmale hinweisen.

In der Figur 1 ist ein Regelschaltbild zur Erläuterung einer ersten Ausführungsform der Erfindung gezeigt, unter Verwendung der Regelungsoption 3: Veränderung von Amplitude und Phasenlage der Ausgangsspannung des Umrichters, gezeigt.

Als eine erste Unteroption wurde als Referenzmotor der Motor mit der höchsten Drehzahl verwendet, als zweite Unteroption zum Einstellen eines Arbeitspunktes wurde eine Drehzahlregelung über den in der Figur 1 gezeigten Drehzahlregler 10 vorgenommen und als dritte Unteroption wurde eine Stromphasenregelung verwendet, die am Ausgang den Phasenwinkel Δγ einstellt und zwar zur Steuerung des feldorientierten Spannungszeigers im dq-Referenz-koordinatensystem mit einem Stromphasenregler 20.

Im vorliegenden Ausführungsbeispiel dient der schnellste, d. h. der am schwächsten belastete Motor, als Referenzmotor. Er stellt damit gleichzeitig auch die Referenz für das Referenzkoordinatensystem dar. Die Wahl des schnellsten bzw. am schwächsten belasteten Motors als Referenzmotor sorgt für die höchste Dynamik im Regelsystem.

In einem weiteren Schritt wird festgelegt, wie der gewünschte Betriebspunkt der Motoren eingestellt werden soll. Im vorliegenden Fall wird ein Drehzahlregler verwendet. Durch Vorgabe einer Solldrehzahl ω* berechnet der Drehzahlregler 10 (hier in Form eines PI-Reglers) durch Vergleich mit den rückgeführten gewichteten Drehzahlen aller Motoren ωₓ eine Sollspannung u. Diese führt durch Transformation mit dem Phasenwinkel γ_{ref} (also ohne Berücksichtigung einer Phasenkorrektur) lediglich zu einer Spannung in q-Richtung im dq-Koordinatensystem an dem Referenzmotor. Berücksichtigt man nun das Ersatzschaltbild der EC-Motoren, führt diese Spannung zu einem sich ausbildenden feldbildenden Stromanteil in d-Richtung sowie einem weiteren drehmomentbildenden Stromanteil in q-Richtung. Die weiteren Motoren erfahren dadurch zwar ein Moment und erreichen einen stabilen Betriebspunkt, dieser Arbeitspunkt ist jedoch aufgrund des unbeeinflussten d-Anteils i.d.R. nicht der effizienteste Arbeitspunkt. Dazu muss die Phasenlage und damit der Phasenwinkel der Ausgangsspannung am Umrichter noch geeignet angepasst werden.

Zur Anpassung der Phasenlage und damit der Einstellung eines bevorzugten Arbeitspunktes wird in der vorliegenden Ausführungsform ein Stromphasenregler 20 benutzt, um die gewünschte Phasenlage des Stroms sicherzustellen. Der Stromphasenregler 20 bestimmt mit Hilfe einer geeigneten Gewichtung der gemessenen Ströme iₓ (im einfachsten Fall nur i_{Umrichter}) die aktuellen feldorientierten Anteile des Stroms in d-Richtung und q-Richtung bezogen auf das dq-Referenzkoordinatensystem. Die vom Phasendetektor ermittelte Abweichung zum gewünschten Sollwert wird auf einen Regler (z.B. einen PI-Regler) gegeben. Der vom Regler 21 berechnete Wert Δγ für den Phasenwinkel sorgt nun im eingeschwungenen Zustand dafür, dass der aus Sicht des Referenzsystems gewünschte d-Strom eingestellt wird.

Durch unterschiedliche Belastung der EC-Motoren oder abweichende Motorparameter der jeweiligen EC-Motoren können sich Differenzen in den Drehzahlen bzw. Drehwinkeln der einzelnen Motoren ergeben. Hier kommt nun der in der Figur 1 gezeigte Stabilisierungsregler 30 zum Einsatz. Wenn sich das System vor der auftretenden Abweichung im eingeschwungen Zustand befunden hat, bedeutet dies, dass u_{y} genau in die Richtung von i_{q} zeigt. Abhängig von der Größe der Differenzen bei der Drehzahl und dem Drehwinkel berechnet der Stabilisierungsregler nun eine Spannung ux, die senkrecht auf der vom Drehzahlregler ermittelten Spannung uy, und damit auch senkrecht auf iq steht. Diese Spannung erzeugt also im ersten Moment einen rein feldbildenden Strom. Läuft einer der EC-Motoren nun dem Referenzmotor nach, wird ein negativer ux = ud Spannungszeiger eingestellt. Dieser erzeugt eine rein feldschwächende Wirkung im schneller laufenden Referenzmotor, was jedoch nur geringe Auswirkungen auf das erzeugte Drehmoment im Referenz-motor hat. Im nachlaufenden Motor wird durch die Drehwinkeldifferenz sowohl eine feldschwächende Wirkung als auch eine drehmomentbildende Wirkung erzeugt, was eine Erhöhung des drehmomentbildenden Stroms im nachlaufenden Motor zur Folge hat. Der nachlaufende Motor wird dadurch beschleunigt und die Drehzahldifferenz verringert sich in der Regelstrecke vorzugsweise bis auf Null. Dieses Regelungsverfahren wirkt in umgekehrter Weise natürlich auch für gegenüber dem Referenzmotor vorlaufende Motoren abbremsend.

Läuft somit einer der EC-Motoren nun dem ausgewählten Referenzmotor nach, sorgt der ermittelte Korrekturwinkel für eine zusätzliche Verdrehung des gestellten Spannungszeigers. Dies hat zur Folge, dass sich bei allen nachlaufenden Motoren dadurch eine negative Änderung des d-Strom-Anteils ergibt und diese Motoren ein größeres Drehmoment ausbilden als im vorausgehenden, unkorrigierten Betriebspunkt. Diese Motoren werden somit beschleunigt bzw. vergrößern ihre Drehzahl.

Ebenso wird bei allen vorauseilenden EC-Motoren eine positive Änderung des d-Strom-Anteils herbeigeführt, wodurch diese EC-Motoren weniger Moment ausbilden als im vorherigen Betriebspunkt und dadurch abgebremst werden.

In den Abbildungen gemäß den Figuren 2, 3 und 4 werden der Drehmomentverlauf, der Drehzahlverlauf und der feldorientierte Stromverlauf von drei beispielhaften parallel geschalteten EC-Motoren an einem Umrichter im Regelbetrieb nach dem ersten Ausführungsbeispiel gezeigt.

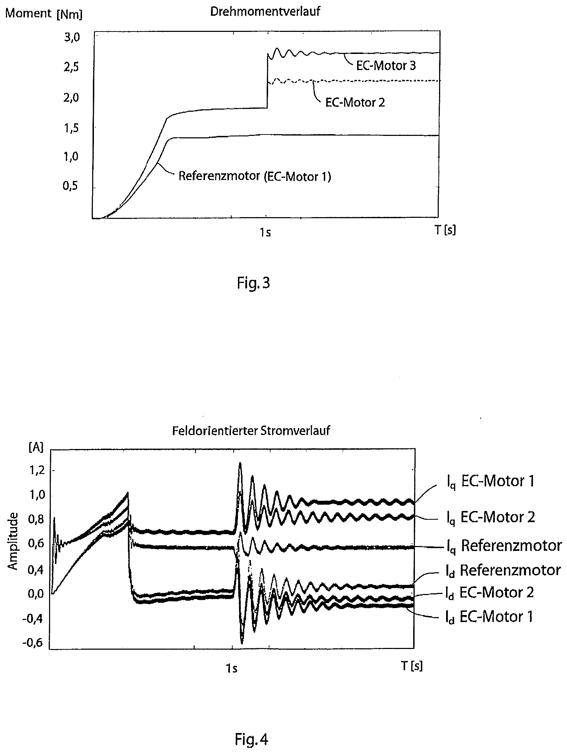

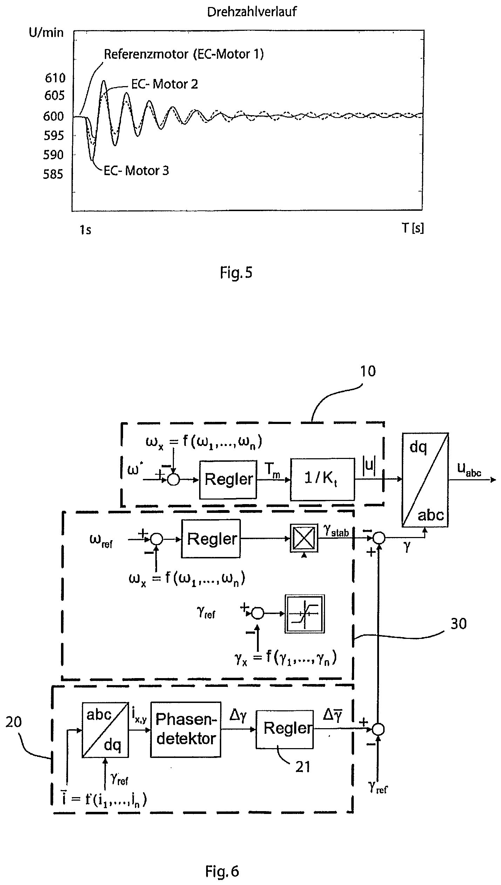

Dabei werden, wie in der Figur 2 gezeigt, die EC-Motoren aus dem Stillstand auf eine Drehzahl von 600 U/min angefahren, die zum Zeitpunkt t=0,4 s nach dem Start erreicht ist. Der Referenzmotor ist der schnellste EC-Motor. Zum Zeitpunkt t = 1s erfahren die beiden anderen EC-Motoren unterschiedliche Lastsprünge, wie in der Figur 3 gezeigt, was zu einer, wie in der Fig. 5 dargestellten Drehzahlabweichung führt. Diese Lastsprünge werden durch den in der Figur 1 gezeigten Stabilisierungsregler abgefangen. Der Phasenregler sorgt anschließend für eine Minimierung des resultierenden d-Stroms. Betreffend dem feldorientierten Stromverlauf wird auf die Figur 4 verwiesen.

In der Figur 6 ist ein Regelschaltbild zur Erläuterung einer zweiten Ausführungsform der Erfindung mit einer anderen Regelungstopologie gezeigt, bei der die Regelungsoption 2: Veränderung der Phasenlage der Ausgangsspannung des Umrichters zur Anwendung kommt. Als Unteroptionen wurden, wie im ersten Ausführungsbeispiel als Referenzmotor der Motor mit der höchsten Drehzahl, zum Einstellen eines Arbeitspunktes eine Drehzahlregelung und zur Einstellung desbevorzugten Betriebspunkt eine Stromphasenregelung verwendet. Weiter umfasst diese Ausführungsform einen Begrenzer für die Spannung.

Wie bereits beim ersten Ausführungsbeispiel erläutert, können sich durch unterschiedliche Belastungen der Motoren oder abweichende Motorparameter Differenzen in den Drehzahlen bzw. Drehwinkeln der EC-Motoren ergeben. Der Stabilisierungsregler berechnet abhängig von den Differenzen bei Drehzahl und Drehwinkel einen Korrekturwinkel y_{stab}. Läuft einer der EC-Motoren nun dem ausgewählten Referenz-motor nach, sorgt der ermittelte Korrekturwinkel für eine zusätzliche Verdrehung des gestellten Spannungszeigers. Dies hat zur Folge, dass sich bei allen nachlaufenden Motoren dadurch eine negative Änderung des d-Strom-Anteils ergibt und diese Motoren ein größeres Drehmoment ausbilden als im vorausgehenden, unkorrigierten Betriebspunkt. Diese Motoren werden somit beschleunigt bzw. vergrößern ihre Drehzahl. Ebenso wird bei allen vorauseilenden EC-Motoren eine positive Änderung des d-Strom-Anteils herbeigeführt, wodurch diese EC-Motoren weniger Moment ausbilden als im vorherigen Betriebspunkt und dadurch abgebremst werden.

## Patentansprüche

1. Verfahren zum Regeln und Steuern von zwei oder mehreren elektronisch kommutierten Motoren, nachfolgend EC-Motoren genannt, die an einem gemeinsamen Umrichter betrieben werden, wobei zum Einstellen eines stabilen Arbeitspunktes oder einer Abfolge von stabilen Arbeitspunkten der EC-Motoren eine gemeinsame Regelung mit wenigstens einem Regler vorgesehen ist, **dadurch gekennzeichnet, dass** eine Kombination von wenigstens einer Regelungsoption und einer Unteroption zu dieser Regelungsoption vorgesehen ist und dabei eine Regelgröße die Spannungsstellung am Ausgang des Umrichters darstellt, wobei die Spannungsstellung am Ausgang des Umrichters mit Hilfe einer Winkel- und Drehzahldifferenzauswertung zwischen einem Referenzmotor und wenigstens einem der EC-Motoren ausgewählt aus den EC-Motoren erfolgt, wobei gemäß einer Unteroption die geeignete Auswahl eines Referenzmotors für die Regelung der Arbeitspunkte der EC-Motoren vorgenommen wird und wobei als Motorreferenzsystem wahlweise der Motor mit der höchsten Drehzahl als Referenzmotor, der Motor mit der niedrigsten Drehzahl, eine geeignet gewichtete Kombination aus mehreren EC-Motoren oder ein fiktiver Referenzmotor verwendet wird.

2. Verfahren nach Anspruch 1, **dadurch gekennzeichnet, dass** als Regelungsoption zum Einregeln eines bevorzugten Arbeitspunktes der EC-Motoren die Veränderung der Amplitude der Ausgangsspannung am Umrichter, die Veränderung der Phasenlage der Ausgangsspannung am Umrichter oder die Veränderung von Amplitude und Phasenlage der Ausgangsspannung am Ausgang des Umrichters verwendet werden.

3. Verfahren nach Anspruch 2, **dadurch gekennzeichnet, dass** eine weitere Unteroption mit einer der in Anspruch 2 definierten Regelungsoptionen kombiniert wird, wobei als weitere Unteroption eine Drehzahlreglung, die Anpassung des Aussteuerungsgrads oder eine reine Stromregelung vorgesehen ist.

4. Verfahren nach einem der Ansprüche 1 bis 3, **dadurch gekennzeichnet, dass** als weitere Unteroption die Sicherstellung des stabilen Arbeitspunktes als effizienter Arbeitspunkt der EC-Motoren über eine Stromphasenregelung, eine mathematische Funktion oder über Wertezuordnungstabellen vorgenommen wird.

5. Verfahren nach einem der Ansprüche 1 bis 4, **dadurch gekennzeichnet, dass** mittels eines Drehzahlreglers durch regelmäßigen oder kontinuierlichen Vergleich von Ist- und Solldrehzahl dafür gesorgt wird, dass die EC-Motoren über die Regelung der Ausgangsspannung des Umrichters eine beliebige Abfolge an Arbeitspunkten stabil folgen.

6. Verfahren nach einem der Ansprüche 1 bis 5, **dadurch gekennzeichnet, dass** die Einstellung des gewünschten Betriebspunkts der EC-Motoren mittels Vorgabe eines fixen Aussteuergrades vom Umrichter erreicht wird.

7. Verfahren nach einem der Ansprüche 4 bis 6 zur Sicherstellung des bevorzugten Arbeitspunktes unter Verwendung einer Stromphasenregelung, wobei der resultierende Strom bei der Stromphasenregelung den dazu erforderlichen d-Strom-Anteil in einem dq-Koordinatensystem enthält, wobei der Stromphasenregler hierzu an seinem Ausgang den Phasenwinkel Δγ zwischen dem d-Strom-Anteil und dem q-Strom-Anteil einstellt, der im eingeschwungenen Zustand des Motors genau der sich durch die Belastung des Motors ergebenden Phasenverschiebung ϕ entspricht.

## Claims

1. A method for the closed-loop and open-loop control of two or more electronically commutated motors, hereinafter referred to as EC motors, operated using a common converter, wherein for the purpose of setting a stable operating point or a sequence of stable operating points of the EC motors, common open-loop or closed-loop control using at least one controller is provided, **characterized in that** a combination of at least one control option and one sub-option to this control option is provided and in this case a controlled variable represents the voltage setting at the output of the converter, wherein the voltage setting at the output of the converter is set by means of an angle and speed difference evaluation between the reference motor and at least one other EC motor, wherein according to a sub-option, a suitable selection of a reference motor is made for controlling the operating points of the EC motors, and wherein the motor used as reference motor in the motor reference system optionally is the motor with the highest speed, the motor with the lowest speed, a suitably weighted combination of multiple EC motors, or a fictitious reference motor.

2. The method according to claim 1, **characterized in that** the change in amplitude of the output voltage at the converter, the change in phase position of the output voltage at the converter, or the change in amplitude and phase position of the output voltage at the converter is used as control option for regulating a preferred operating point of the EC motors.

3. The method according to claim 2, **characterized in that** another sub-option is combined with the control option defined in claim 2, wherein speed control, adjustment of the degree of level control, or mere current control are used as another sub-option.

4. The method according to any one of claims 1 to 3, **characterized in that** ensuring the stable operating point as an efficient operating point of the EC motors is achieved by current phase control, a mathematical function, or by means of value allocation tables, as another sub-option.

5. The method according to any one of claims 1 to 4, **characterized in that** it is ensured by means of a speed controller and by periodically or continuously comparing the actual and the target speeds that the EC motors follow any sequence of operating points via the control of the output voltage of the converter in a stable manner.

6. The method according to any one of claims 1 to 5, **characterized in that** setting the desired operating point of the EC motors is achieved by specifying a fixed degree of level control by the converter.

7. The method according to any one of claims 4 to 6 for ensuring the preferred operating point using current phase control, wherein the resulting current to be controlled by current phase control contains the required d-current portion in a dq coordinate system, wherein the current phase controller for this purpose sets the phase angle Δγ at its output between the d-current portion and the q-current portion, which in the steady state of the motor corresponds exactly to the phase shift ϕ resulting from the motor load.

## Revendications

1. Procédé permettant de réguler et de commander deux ou plusieurs moteurs à commutation électronique, ci-après appelés moteurs EC, qui fonctionnent sur un convertisseur commun, dans lequel une régulation commune avec au moins un régulateur est prévue pour le réglage d'un point de fonctionnement stable ou d'une série de points de fonctionnement stables des moteurs EC,
**caractérisé en ce qu'**une combinaison d'au moins une option de régulation et d'une sous-option pour cette option de régulation est prévue, une grandeur de régulation représentant alors le réglage de tension à la sortie du convertisseur, dans lequel le réglage de tension à la sortie du convertisseur est effectué à l'aide d'une évaluation de différence d'angle et de vitesse de rotation entre un moteur de référence et au moins l'un des moteurs EC sélectionné parmi les moteurs EC, dans lequel selon une sous-option, la sélection appropriée d'un moteur de référence est effectuée pour la régulation des points de fonctionnement des moteurs EC, et dans lequel on utilise comme système de référence de moteur au choix le moteur ayant la plus haute vitesse de rotation comme moteur de référence, le moteur ayant la plus basse vitesse de rotation, une combinaison pondérée de façon appropriée de plusieurs moteurs EC ou un moteur de référence fictif.

2. Procédé selon la revendication 1, **caractérisé en ce qu'**on utilise comme option de régulation pour la mise au point d'un point de fonctionnement préféré des moteurs EC la variation de l'amplitude de la tension de sortie au niveau du convertisseur, la variation de la position de phase de la tension de sortie au niveau du convertisseur ou la variation de l'amplitude et de la position de phase de la tension de sortie à la sortie du convertisseur.

3. Procédé selon la revendication 2, **caractérisé en ce qu'**une autre sous-option est combinée avec l'une des options de régulation définies à la revendication 2, dans lequel une régulation de vitesse de rotation, l'adaptation du niveau de modulation ou une simple régulation de courant est prévue comme une autre sous-option.

4. Procédé selon l'une quelconque des revendications 1 à 3, **caractérisé en ce que** comme une autre sous-option, le fait d'assurer le point de fonctionnement stable comme point de fonctionnement efficace des moteurs EC est effectué par une régulation de phase de courant, une fonction mathématique ou par l'intermédiaire de tableaux de correspondance de valeurs.

5. Procédé selon l'une quelconque des revendications 1 à 4, **caractérisé en ce qu'**au moyen d'un régulateur de vitesse de rotation, la comparaison régulière ou continue de la vitesse de rotation réelle et théorique permet d'assurer que les moteurs EC suivent de façon stable une série libre de points de fonctionnement par l'intermédiaire de la régulation de la tension de sortie du convertisseur.

6. Procédé selon l'une quelconque des revendications 1 à 5, **caractérisé en ce que** le réglage du point de fonctionnement souhaité des moteurs EC est obtenu au moyen de la spécification d'un degré de modulation fixe par le convertisseur.

7. Procédé selon l'une quelconque des revendications 4 à 6 pour assurer le point de fonctionnement préféré en utilisant une régulation de phase de courant, dans lequel le courant résultant contient lors de la régulation de phase de courant contient la composante de courant d nécessaire à cet effet dans un système de coordonnées dq, dans lequel le régulateur de phase de courant règle à cet effet au niveau de sa sortie l'angle de phase Δγ entre la composante de courant d et la composante de courant q qui correspond en régime permanent du moteur exactement au décalage de phase ϕ résultant de la sollicitation du moteur.
